(19) **Europäisches Patentamt**

**European Patent Office**

**Office européen des brevets**

(11) **EP 0 756 219 B1**

(12) **EUROPÄISCHE PATENTSCHRIFT**

(45) Veröffentlichungstag und Bekanntmachung des Hinweises auf die Patenterteilung:
**24.10.2001   Patentblatt 2001/43**

(51) Int Cl.7: **G05B 19/406**

(21) Anmeldenummer: **96106264.3**

(22) Anmeldetag: **22.04.1996**

(54) **Verfahren zur Überwachung von Produkteigenschaften und Verfahren zur Regelung eines Herstellungsprozesses**

Method for supervising product properties and method for controlling a manufacturing process

Procédé de surveillance des propriétés de produits et procédé de contrôle d'un procédé de fabrication

(84) Benannte Vertragsstaaten:
**AT BE CH DE LI**

(30) Priorität: **20.04.1995  DE 19514535**

(43) Veröffentlichungstag der Anmeldung:
**29.01.1997   Patentblatt 1997/05**

(73) Patentinhaber:
• **Wortberg, Johannes, Prof. Dr.**
  **45481 Mülheim/Ruhr (DE)**
• **Häussler, Jörg, Dr.**
  **61169 Friedberg (DE)**

(72) Erfinder:
• **Wortberg, Johannes, Prof. Dr.**
  **45481 Mülheim/Ruhr (DE)**
• **Häussler, Jörg, Dr.**
  **61169 Friedberg (DE)**

(74) Vertreter: **Schumacher, Horst, Dr. Dipl.-Phys. et al**
**König-Palgen-Schumacher-Kluin**
**Patentanwälte**
**Frühlingstrasse 43A**
**45133 Essen (DE)**

(56) Entgegenhaltungen:
**EP-A- 0 369 220          EP-A- 0 487 014**

**Beschreibung**

Die Erfindung betrifft ein Verfahren zur Überwachung von Produkteigenschaften gemäß dem Oberbegriff des Anspruchs 1 sowie ein Verfahren zur Regelung eines jeweils ähnliche Produkte herstellenden Herstellungsprozesses gemäß dem Oberbegriff des Anspruchs 2. Insbesondere betrifft die Erfindung Überwachungs- und Regelungsverfahren für Prozesse, bei welchen jeweils ähnliche Produkte hergestellt werden, insbesondere Kunststoffverarbeitungsprozesse, wie Spritzgieß- oder Extrusionsprozesse. Es versteht sich jedoch, daß die Erfindung auch Überwachungs- und Regelungsverfahren betrifft, bei welchen die Eigenschaften verschiedener, jedoch in gewisser Weise ähnlicher Produkte überwacht werden.

Der Begriff der "ähnlichen Produkte" umfaßt im folgenden Produkte, die zumindest eine identische, zu überwachende Produkteigenschaft aufweisen und deren Herstellungsprozess durch identische Prozeßparameter beschrieben werden kann. Insbesondere sind hierunter Serienprodukte zu verstehen.

Ein derartiges Überwachungsverfahren ist z.B. aus der EP 0 369 220 B1 bekannt. In dieser Druckschrift wird ein Verfahren zur Überwachung und/oder Regelung eines Spritzgießprozesses, insbesondere für thermoplastische Kunststoffe vorgestellt. Um die Qualität der durch dieses Verfahren hergestellten Produkte zu garantieren und einen möglichst ungestörten Ablauf der Spritzgießprozesse zu ermöglichen, wird in dieser Druckschrift vorgeschlagen, als wichtig erkannte Prozeßparameter in Abhängigkeit von der Zeit zu überwachen und diesen Prozeßparametern entsprechende Überwachungssignale einem Soll-Ist-Vergleich zu unterziehen, wobei bei Überschreitung zulässiger Toleranzen das entsprechende Produkt ausgesondert und im Wiederholungsfalle die Spritzgießmaschine stillgesetzt wird. Anhand der Prozeßdaten wird mittels des ausschließlich durch die Toleranzintervalle gebildeten Prognosemodells eine Produkteigenschaft, nämlich die Qualität, prognostiziert.

In dem Artikel "Kritische Betrachtungen zur Prozeßüberwachung", Teil 2 in der Zeitschrift PLASTVERARBEITER (44), 1993, Nr. 9 ist ein gattungsgemäßes Überwachungsverfahren vorgestellt. Bei diesem Verfahren wird der Problematik des Auffindens der wichtigen Prozeßparameter, die ansonsten durch Versuchsreihen, gewonnene Erfahrungen oder ähnlichem ermittelt bzw. erraten werden, dadurch begegnet, daß möglichst alle zugänglichen Prozeßparameter datentechnisch erfaßt werden und anhand dieser ermittelten Prozeßdaten sowie korrespondierenden, gemessenen Produkteigenschaftsdaten ein Prognosemodell erstellt wird. Das Prognosemodell wird aus dem die Prozeß- und Produkteigenschaftsdaten umfassenden Datensatz mit Hilfe einer multiplen linearen Regressionsanalyse gebildet und stellt den Zusammenhang zwischen den Werten der Prozeßparameter und den Produkteigenschaften in Form einer linearen Gleichung dar. Durch Wahl einer geeigneten Analysemethode werden in diese lineare Gleichung nur diejenigen Prozeßparameter aufgenommen, die unter einem frei wählbaren Vertrauensniveau einen signifikanten Einfluß auf die Produkteigenschaften ausüben. Mittels geeigneter Transformationen der Prozeßdaten bzw. der Produkteigenschaftsdaten können auch nichtlineare Einflüsse in das Prognosemodell integriert werden. Die zur Bereitstellung dieses Prognosemodells benötigten Daten können während der laufenden Produktion gewonnen werden. Eine Unterbrechung der Produktion zwecks Durchführung eines Versuchsplanes ist nicht notwendig, und es besteht auch nicht die Gefahr einer Ausschußproduktion während einer Versuchsphase, so daß das Prognosemodell während der laufenden Produktion aufgestellt werden kann.

Das Prognosemodell wird anhand von Prüfdaten ständig bzw. zu bestimmten Zeitpunkten überprüft und gegebenenfalls aktualisiert. Hierzu dienen sowohl der bereits bestehende Datensatz als auch die neuen Prüfdaten, so daß qualitätsbeeinflussende Prozeßparameter, die zunächst konstant waren und deren mögliche Relevanz nicht erkannt wurde, als solche erkannt und in das Prognosemodell aufgenommen werden, wenn ihre Konstanz nicht mehr gegeben ist. Auf diese Weise ist das Prozeßmodell einem zeitlich veränderlichen Prozeßverhalten nachführbar, wobei das Prozessmodell auch seine Struktur ändern kann.

Die anfallende Datenmenge wird zudem auf den zur Modellbildung notwendigen Umfang reduziert, so daß z.B. durch redundante Information keine "Datenfriedhöfe" erzeugt werden.

Der vorliegenden Erfindung liegt die **Aufgabe** zugrunde, bei gattungsgemäßen Überwachungs- und Regelungsverfahren eine möglichst einfache Kontrolle der anfallenden Datenmenge zu ermöglichen. Zur Lösung dieser Aufgabe wird ein Verfahren zur Überwachung von Produkteigenschaften mit den Merkmalen des Anspruchs 1 sowie ein Verfahren zur Regelung eines Herstellungsprozesses mit den Merkmalen des Anspruchs 2 vorgeschlagen.

Ein erfindungsgemäßes Überwachen und Speichern der verfügbaren Prozeßdaten beschränkt sich hier zunächst auf die Erfassung der Prozeßdaten dergestalt, daß diese zwischengespeichert und einem Vergleich mit den zugehörigen Grenzwerten unterzogen werden. Die verfügbaren Prozeßdaten werden solange zwischengespeichert, bis durch das erfindungsgemäße Verfahren festgestellt wird, daß diese konkreten Prozeßdaten zusammen mit gemessenen Produkteigenschaftsdaten in dem dem Prognosemodell zugrunde liegenden Datensatz nicht gespeichert werden sollen.

Prognosemodelle sind jeweils bloß innerhalb bestimmter Grenzwerte gültig. Derartige Grenzwerte werden, wird das Prognosemodell mittels multipler Regressionsanalyse oder durch ein neuronales Netzwerk bereitgestellt, durch die Streuung bzw. durch die Maximal- und Minimalwerte jedes einzelnen Prozeßparameters in den zur Modellbildung verwendeten Datensätzen bestimmt. Selbstverständlich sind auch andere Kriterien für die Festlegung dieser Grenzwerte möglich. Liegen die bei der Herstellung eines bestimmten Produktes auftretenden Prozeßdaten, bzw. zumindest einer derselben, außerhalb dieser Grenzwerte, werden die Eigenschaften dieses Produktes gemessen und die Produkteigenschaftsdaten zusammen mit den korrespondierenden Prozeßdaten in dem dem Prognosemodell zugrunde liegenden Datensatz gespeichert. Das Ergebnis der Messung bzw. die Produkteigenschaftsdaten werden mit dem von dem Prognosemodell ausgegebenen Prognoseintervall verglichen. Liegen die Produkteigenschaftsdaten nicht innerhalb des Prognoseintervalls, wird das Prognosemodell angepaßt. Prognostiziert jedoch das Prognosemodell die Produkteigenschaftsdaten dieses Produktes korrekt, d.h. die gemessenen Produkteigenschaftsdaten liegen innerhalb des Prognoseintervalls, so kann der Gültigkeitsbereich des Prognosemodells ohne Neuerstellung erweitert werden, indem die Grenzwerte dem neuen, die neuen, gemessenen Produkteigenschaftsdaten zusammen mit den korrespondierenden Prozeßdaten einschließenden Datensatz angepaßt werden.

Auf diese Weise kann die Zahl der durchzuführenden Messungen und somit auch die Zahl der dauerhaft im Datensatz zu speichernden Daten minimiert werden, da jeweils nur die unbedingt nötigen Messungen durchgeführt werden. Insbesondere kann dieses Verfahren auch bei laufenden Herstellungsprozessen, bei welchen z. B. die Qualitätsüberwachung mittels "statistical process control" (SPC) durchgeführt wird, vorteilhaft angewendet werden.

Es versteht sich, daß erfindungsgemäße Überwachungs- und Regelungsverfahren auch bei kontinuierlichen Fertigungsverfahren vorteilhaft Anwendung finden können. Hierzu werden die Prozeßparameter zeitlich versetzt, synchron zur Durchlaufgeschwindigkeit des Produktes durch die Anlage erfaßt. Entsprechend wird auch das entsprechende Teilstück des kontinuierlich hergestellten Produktes verfolgt und, falls die für dieses Teilstück erfaßten Prozeßdaten außerhalb der Grenzwerte liegen, einer Messung zugeführt.

Durch geeignete Normierung bzw. die Vergabe geeigneter Parameter können auch quantitative Merkmale bzw. nicht quantitativ meßbare Eigenschaften der Prognose zugeführt werden.

Insbesondere ist es auch möglich, mit den Produkteigenschaften, wie Farbe, Maß, Stabilität, Oberflächenrauhigkeit u. ä., auch jeweils einem Produkt bzw. dessen Herstellung zuzuordnende Prozeßparameter, wie Produktivität, Prozeßdauer, Zykluszeit, Durchlaufgeschwindigkeiten, Rohmaterialverbrauch, Werkzeugtemperaturen u. ä. zu prognostizieren. Hierdurch wird es - mit oder ohne Qualitätsüberwachung - möglich, auch einen oder mehrere Prozeßparameter mittels des erfindungsgemäßen Prognosemodells zu prognostizieren, zu überwachen und - gegebenenfalls - den Herstellungsprozeß hinsichtlich seiner Wirtschaftlichkeit zu optimieren.

Ein erfindungsgemäßes Überwachungsverfahren kann somit neben der Überwachung von Produkteigenschaften auch der Überwachung des zur Produktherstellung dienenden Prozesses, insbesondere auch dessen Produktivität, dienen. Besonders in der Massenproduktion erscheint in diesem Zusammenhang die Überwachung der Prozeßdauer oder zu dieser proportionaler Größen von großer Bedeutung. Damit sind Prozeßparameter, durch das Prognosemodell als dem Produkt zuzuordnende Prozeßeigenschaft prognostizierbar. Hierbei darf jedoch eine Vermengung der dem Prognosemodell zugeführten Prozeßdaten und der von dem Prognosemodell ausgegebenen, prognostizierten Prozeßparameter in der Regel nicht vorgenommen werden.

Je nach konkreter Ausgestaltung des Prognosemodells ist es folglich möglich, daß die Prozeßparameter dem Prognosemodell sowohl als Prozeßdaten zugeführt als auch von diesem prognostiziert werden. Bei prognostizierten Prozeßparametern wird auf deren Zuführung als Prozeßdaten verzichtet. Vielmehr können diese Prozeßdaten der unmittelbaren Modelüberprüfung dienen, so daß das Prognosemodell im Hinblick auf die prognostizierten Prozeßparameter nicht durch den Vergleich der zugehörigen Prozeßdaten mit Grenzwerten überwacht wird, sondern daß diese Überwachung einerseits unmittelbar durch den Vergleich der zugehörigen Prozeßdaten mit den prognostizierten Prozeßparametern und andererseits mittelbar durch den Vergleich der übrigen Prozeßdaten mit deren zugehörigen Grenzwerten erfolgen kann.

Werden Prozeßparameter durch das Prognosemodell überwacht, ist es in der Regel nicht nötig, das Ergebnis der Prognose der Prozeßparameter einer Qualitätsweiche zuzuführen, da die prognostizierten Prozeßparameter häufig nur mittelbar Aussagen über die Qualität beinhalten. Vielmehr ist es in derartigen Fällen vorteilhaft, das Ergebnis der Prognose einer Warn- oder Anzeigevorrichtung zuzuführen, damit negative - aber auch positive - Veränderungen des Prozesses, z. B. eine außergewöhnlich kurze oder lange Prozeßdauer oder ein außergewöhnlich hoher aber auch niedriger Materialverbrauch, dem Hersteller rechtzeitig mitgeteilt werden.

Es versteht sich, daß die prognostizierten Prozeßparameter auch einem Nothalt oder anderen geeigneten, den Herstellungsprozeß beeinflussenden Vorrichtungen zur Reaktionsauslösung zugeführt werden können.

Die prognostizierenden Eigenschaften des Prognosemodells können genutzt werden, um den Einfluß eines Regeleingriffs auf die Qualität des Produktes zu prognostizieren und so die Qualität des Produktes zu optimieren. Insbesondere ist es von Vorteil, zumindest einen Teil der Stellgrößen für ein Stellglied des Regelkreises als Prozessdaten zu erfassen. Dieses verringert den Gesamtaufwand für die Anwendung des erfindungsgemäßen Regelungsverfahrens und erleichtert die Prognose der Folgen eines Regeleingriffs. Dessen Verhalten konnte vormals nur über indirekte Zusammenhänge zu den Prozeßdaten in das Prognosemodell abgeschätzt werden.

Es ist jedoch auch denkbar, daß Prozeßparameter voneinander bzw. von dem Wert zumindestens eines Stellgliedes abhängen. Besonders in diesem Fall kann es von Vorteil sein, wenn das Prognosemodell die durch den Regeleingriff bedingte Veränderung der Prozeßdaten prognostiziert. Insbesondere ist in diesem Fall das Prognosemodell an ein sich veränderndes Regelverhalten anpaßbar. Desweiteren kann dieses Prognosemodell auch eine Zeitabhängigkeit dieser Veränderung umfassen.

Ebenso kann die Prognose von Prozeßparametern der Optimierung des Herstellungsprozesses, wie der Produktivität, der Prozeßgeschwindigkeit, dem Materialverbrauch, der - z. B. thermischen - Belastung von Verschleißteilen u. a., dienen. Hierbei werden diese Prozeßparameter in der Regel nicht für jedes Produkt überwacht, gespeichert und mit ihren Grenzwerten verglichen. Vielmehr werden diese Prozeßparameter wie Produkteigenschaften gehandhabt, ihre Werte also prognostiziert bzw. vom Prognosemodell ausgegeben. Auf diese Weise lassen sich unerwünschte Rückkopplungen bzw. Diskrepanzen zwischen prognostizierten Prozeßparametern und deren korrespondierenden, tatsächlichen Prozeßdaten vermeiden.

Andererseits sind in der Regel die Prozeßdaten einer Messung leicht zugänglich bzw. durch den Herstellungsprozeß per se bereits bereitgestellt. Insofern kann das Prognosemodell bzgl. der prognostizierten Prozeßparameter (zumindest der einfach meßtechnisch zugänglichen Prozeßparameter) ständig und on-line überprüft werden. Dieses gilt z. B. für die Prozeßdauer, bzw. Zykluszeiten, Einspritzzeiten und ähnliches, die sehr einfach gemessen werden können und zur Prozeßoptimierung, insbesondere zur Prozeßbeschleunigung in der Regel von großem Interesse sind.

Besonders vorteilhaft ist es, wenn das Prognosemodell der erfindungsgemäßen Überwachungs- und Regelungsverfahren jeweils anhand der gespeicherten Prozeßdaten und Produkteigenschaftsdaten erstellt bzw. angepaßt wird. Auf diese Weise kann auf eine Unterbrechung des laufenden Herstellungsprozesses zum Durchführen einer Versuchsreihe, bei welcher die Prozeßparameter sämtliche erreichbaren Werte durchlaufen, verzichtet und der für die Prognosemodellbildung erforderliche Datensatz on-line, bei laufendem Herstellungsprozeß erfaßt werden. Insbesondere ist der Verzicht auf die Durchführung von Versuchen bzw. Versuchsreihen zur Aufstellung eines Prognosemodells vorteilhaft, wenn sich einige der Einflußgrößen, z.B. aus dem Bereich der Rohstoffe und der Prozeßumgebung nicht nach den Regeln eines Versuchsplanes gezielt variieren lassen. Die natürliche Variation dieser Einflußgrößen läßt diese dann im Laufe der Zeit, aufgrund der Prognosemodellanpassungen, in das Prognosemodell einfließen.

Um das Überwachungsverfahren möglichst effektiv zu installieren, empfiehlt es sich, zum erstmaligen Erstellen des Prognosemodells eine Nullserie zu fahren. Hierbei sollten von sämtlichen, während dieser Nullserie hergestellten Produkten die Produkteigenschaften gemessen und als Produkteigenschaftsdaten zusammen mit den korrespondierenden Prozeßdaten gespeichert werden. Selbiges gilt natürlich auch für durch das Prognosemodell zu prognostizierende Prozeßeigenschaften sowie deren korrespondierende Prozeßdaten. Nach der Aufnahme einer gewissen Anzahl Datensätze wird erstmalig ein Prognosemodell erstellt.

Das Prognosemodell kann z.B. mittels der an sich bekannten multiplen linearen Regressionsanalyse aus den gespeicherten Prozeß- und Produkteigenschaftsdaten gebildet werden. Durch geeignete, insbesondere nichtlineare Transformationen können eventuell auftretende Nichtlinearitäten in dieses an sich lineare Modell übernommen werden. Ebenso ist es denkbar, zwei oder mehr Prozeßgrößen zu multiplizieren und dieses Produkt als lineare Größe zu behandeln. Hierdurch können Wechselwirkungseffekte zwischen Parametern berücksichtigt werden. Ebenso ist es möglich, Produktbildung und Transformation zu kombinieren. Im Endeffekt umfaßt ein derartiges Prognosemodell eine lineare Gleichung im allgemeinsten Sinne, also auch ein lineares Gleichungssystem. Diese lineare Gleichung kann vorteilhaft als Entscheidungsgrundlage für gezielte, manuelle Eingriffe in den Herstellungsprozeß bzw. für gezielte Änderungen einzelner Prozeßparameter dienen. Es versteht sich, daß auch alle anderen, an sich bekannten Regressionsanalysen zur Erstellung eines erfindungsgemäßen Prognosemodells dienen können.

Die Regressionskoeffizienten geben hierbei die Stärke der Einflußmaßnahme sowie, durch ihr Vorzeichen, deren Richtung an. Zum einen kann die Einflußnahme durch manuelles Verändern des entsprechenden Stellgliedes vorgenommen werden. Es versteht sich jedoch, daß die Stellgröße auch automatisch vorgegeben werden kann.

Im Falle der Modellbildung mittels multipler linearer Regressionsanalyse folgt das Prognoseintervall aus dem durch die lineare Gleichung vorgegebenen Prognosewert und einem, vorzugsweise symmetrischen, Intervall um den Prognosewert, in welchem unter einer vorgegebenen statistischen Sicherheit der "wahre Wert", also der tatsächliche, aus den vorliegenden Prozeßdaten in der Herstellung resultierende Wert, zu finden ist. Besonders vorteilhaft ist die Verwendung des aus der Statistik-Literatur bekannten "simultanen Prognoseintervalls". Jedoch können auch alle anderen, dem Stand der Technik entnehmbaren Intervalle, die eine Aussage über den "wahren Wert" in Abhängigkeit von dem statistisch ermittelten Wert treffen, vorteilhaft Verwendung finden. Hierbei versteht es sich, daß das den Prognosenwert umgebende, vorzugsweise symmetrische Intervall auch infinit klein sein kann.

Obwohl sich sämtliche, dem Stand der Technik entnehmbaren Verfahren der multiplen linearen Regressionsanalyse, häufig mit "enter all", "forward", "backward" und "step-wise" bezeichnet, zur Modellbildung eignen, empfiehlt sich insbesondere das Verfahren der schrittweisen Modellbildung ("step-wise"), da bei diesem Verfahren Prozeßparameter, deren Signifikanz für das zu bildende Modell unter einem zu definierenden Signifikanzwert liegt, nicht in das Modell mit aufgenommen werden. Hierdurch bleibt das gebildete Prognosemodell bzw. die entsprechende lineare Gleichung überschaubar und vor allem minimal. Üben derartig eliminierte Prozeßparameter im Laufe der Zeit einen signifikanten Einfluß auf die prognostizierten Werte aus, so wird ihr Einfluß während der folgenden Modellbildung, die, wie oben erläutert, von allen vorliegenden Datensätzen ausgeht, in das Prognosemodell übernommen.

Wegen ihrer guten Anpassungsfähigkeit an sich ändernde Randbedingungen sind auch Künstliche Neuronale Netzwerke vorteilhaft als Bestandteile des Prognosemodells einsetzbar. Insbesondere eignen sich sogenannte "Error-backpropagation-Netzwerke". Der Eingabevektor des Neuronalen Netzwerkes hat hierbei die Dimension der zur Verfügung stehenden Anzahl an Prozeßparametern, während der Ausgabevektor die Dimension der Anzahl der zu prognostizierenden Qualitätsmerkmale aufweist.

Wird das Künstliche Neuronale Netzwerk in Verbindung mit einem erfindungsgemäßen Regelungsverfahren angewendet, kann sowohl der Eingabe- als auch der Ausgabevektor um die Anzahl der zu regelnden Stellglieder erweitert sein. Umfassen sowohl Eingabe- als auch Ausgabevektor ein Stellglied, so kann in besonders vorteilhafter Weise eine Rückkopplung und Prognose des Regelverhaltens erfolgen. Es versteht sich jedoch, daß für diese Rückkopplung auch ein zweites Künstliches Neuronales Netzwerk vorgesehen sein kann.

Im allgemeinen ist eine Zwischenschicht an Verarbeitungselementen für ein derartiges Neuronales Netzwerk ausreichend, bei komplexen Zusammenhängen oder einer großen Anzahl zu prognostizierender Qualitätsmerkmale kann jedoch die Verwendung von zwei Zwischenschichten vorteilhaft sein. Es versteht sich, daß sämtliche dem Stand der Technik auf dem Gebiet der Künstlichen Neuronalen Netzwerke entnehmbaren Vorteile und Merkmale solcher Neuronaler Netzwerke, insbesondere der "Error-Backpropagation-Netzwerke" vorteilhaft Verwendung finden können.

Da bei Neuronalen Netzwerken kein statistisch begründetes Prognoseintervall angegeben werden kann, kann das Prognoseintervall z.B. durch den von dem Neuronalen Netzwerk ausgegebenen Prognosewert und ein diesen symmetrisch umgebendes Intervall gebildet sein, welches die maximale Abweichung zwischen dem Ausgabewert des Netzwerkes und dem gewünschten Zielwert während der Lernphase des Neuronalen Netzwerkes beschreibt.

Insbesondere eignen sich Neuronale Netzwerke aufgrund ihres nicht-linearen Übertragungsverhaltens zur Abbildung nichtlinearer Zusammenhänge zwischen Prozeßparametern und Produkteigenschaften. Besonders auch miteinander wechselwirkende Einflüsse zweier Prozeßparameter auf eine Produkteigenschaft können durch Neuronale Netzwerke besonders einfach und präzise erfaßt werden.

Die oben erläuterten Prognosemodelle ermöglichen eine 100%ige On-line-Prognose der Qualitätsmerkmale jeweils ähnlicher Produkte innerhalb der Gültigkeitsgrenze des Prognosemodells. Anhand der vom Prognosemodell ausgegebenen Prognoseintervalle kann eine Entscheidung über die weitere Behandlung des entsprechenden Produktes getroffen werden. Hierzu kann ein entsprechendes Signal einer Qualitätsweiche zugeleitet werden, die je nach Lage des Prognoseintervalls bezüglich vorher festgelegter Qualitätsgrenzen das entsprechende Produkt als schlecht oder gut kennzeichnet bzw. aussondert. Liegt zumindest eine der vorher festgelegten Qualitätsgrenzen innerhalb des Prognoseintervalls, so kann das entsprechende Produkt einer Nachprüfung unterzogen werden, da das vorliegende Prognosemodell wegen seiner intrinsischen, durch die Spannweite des Prognoseintervalls definierten Ungenauigkeit keine gesicherte Aussage über die Qualität des entsprechenden Produktes bezüglich der entsprechenden Qualitätsgrenze treffen kann.

Es kann, insbesondere im Falle Künstlicher Neuronaler Netze, von Vorteil sein, mittels an sich bekannter, statistischer Prozesse die existierenden Datensätze auf redundante Informationen zu überprüfen und diese zu eliminieren, um die für die Modellbildung benötigte Zeitdauer zu reduzieren. Da die Signifikanz einiger Prozeßparameter möglicherweise erst nach einiger Zeit erkannt werden kann, ist es notwendig, möglichst viele, nach Möglichkeit alle auftretenden Prozeßparameter zu erfassen und zusammen mit den korrespondierenden Produkteigenschaften zu speichern. Insbesondere wird es auf diese Weise möglich, auch im Nachhinein das Prognosemodell zur Prognose ausgewählter Prozeßparameter zu erweitern.

Um den Gesamtaufwand zur Anwendung des erfindungsgemäßen Überwachungsverfahrens zu verringern, empfiehlt es sich, wenigstens einen Teil der Daten zumindest eines zum Steuern des vorliegenden Herstellungsprozesses genutzten Sensors, eventuell jedoch aller dieser Sensoren, als Prozeßdaten zu erfassen. Wird die den Herstellungsprozeß durchführende Vorrichtung mittels eines Rechners gesteuert, können in besonders einfacher Weise die dem Rechner zugänglichen Daten als Prozeßdaten erfaßt werden. Es kann jedoch von Vorteil sein, weitere Prozeßdaten, wie Lagertemperatur, Feuchtegehalt, Werkhallentemperatur oder ähnliches, als Prozeßdaten zu erfassen.

Es versteht sich, daß weiterhin alle bekannten Verfahren genutzt werden können, durch welche der bestehende, dem Prognosemodell zugrunde liegende Datensatz in seiner Größe beschränkt werden kann, insbesondere durch welche nachträglich gegebenenfalls doch vorhandene redundante Daten aus diesem Datensatz entfernt werden können.

Die Nutzung eines Prognosemodells zur Prozeßprognose und /oder -optimierung statt oder in Ergänzung zur Qualitätsprognose ist unabhängig von den übrigen Merkmalen erfindungsgemäßer Verfahren vorteilhaft anwendbar. Insbesondere kann ein Prognosemodell vorteilhaft zur Produktivitätsoptimierung eingesetzt werden. Hierzu können alle geeigneten und denkbaren, die Produktivität beeinflussende Parameter, wie Prozeßdauern, Material- und Energieverbrauch, Prozeßgeschwindigkeiten, - z. B. thermische - Belastung von Verschleißteilen, durch das Prognosemodell prognostiziert und überwacht bzw. optimiert werden. Insbesondere braucht ein derartiges Prognosemodell nicht auf jeweils einem Produkt bzw. dessen Herstellung zuzuordnende Prozeßparameter beschränkt sein oder muß zumindest auch eine Produkteigenschaft prognostizieren. Vielmehr ist es möglich, ein Prognosemodell vorzusehen, welches ausschließlich Prozeßparameter prognostiziert und/oder bei welchem auch bzw. ausschließlich nicht einem konkreten Produkt bzw. dessen konkreter Herstellung zuzuordnende Prozeßparameter prognostiziert werden.

Es versteht sich, daß diese Optimierung auch in einem Regelkreis erfolgen kann, wobei andererseits ein derartiges Prognosemodell auch parallel zu einem Herstellungsprozeß und/-oder nur mittelbar, z. B. manuell, mit diesem verknüpft verwendet werden kann.

Konkret wird zur Prozeßprognose bzw. Produktivitätsoptimierung ein Prognosemodell vorgesehen, welches anhand von Prozeßdaten Prozeßeigenschaften prognostiziert. Vorteilhafterweise ist das Prognosemodell an sich im wesentlichen wie zur Qualitätsprognose bekannte Prognosemodelle, insbesondere wie die aus dem Artikel "Kritische Betrachtungen zur Prozeßüberwachung", Teil 2 in der Zeitschrift PLASTVERARBEITER (44), 1993, Nr. 9 bekannten CPC-Prognosemodelle, ausgestaltet und wird im Rahmen der vorliegenden erfindungsgemäßen Verfahren genutzt.

Die vorgenannten sowie die beanspruchten und in den Ausführungsbeispielen beschriebenen erfindungsgemäßen Verfahrensschritte unterliegen hinsichtlich der Verfahrensbedingungen keinen besonderen Ausnahmebedingungen, so daß die in dem jeweiligen Anwendungsgebiet bekannten Auswahlkriterien uneingeschränkt Anwendung finden.

Weitere Einzelheiten, Merkmale und Vorteile des Gegenstandes der Erfindung ergeben sich aus der nachfolgenden Beschreibung der Ausführungsbeispiele sowie der zugehörenden Verfahrensfließbilder und der Zeichnung, in welchen - beispielhaft - bevorzugte Ausführungsformen eines erfindungsgemäßen Überwachungsverfahrens dargestellt sind. Es versteht sich, daß die einzelnen Merkmale, insbesondere der einzelnen Verfahrensschritte, einzeln und in jeder beliebigen Kombination untereinander vorteilhaft Anwendung finden können. Es zeigen:

Fig. 1a      ein Verfahrensfließbild für ein erfindungsgemäßes Überwachungsverfahren;
Fig. 1b      ein Verfahrensfließbild für ein weiteres erfindungsgemäßes Überwachungsverfahren;
Fig. 2      ein Verfahrensfließbild für ein Überwachungsverfahren nach Fig. 1 bei einem Spritzgießprozeß:
Fig. 3      die Grenzwerte zweier, beispielhafter Prozeßparameter und beispielhafte diesbezügliche Prozeßdaten bei dem Überwachungsverfahren nach Fig. 2; und
Fig. 4      eine schematische Darstellung der Prognose- und Entscheidungsmöglichkeiten bei dem Überwachungsverfahren nach Fig. 2.

In den folgenden Verfahrensfließbildern sind ständige Datenflüsse durch durchgezogene Linien dargestellt, während gestrichelte Linien einen zeitweisen Datenfluß darstellen, der zumindest bei Produkten bzw. für Prozeßdaten initiiert wird, bei welchen wenigstens einer der Prozeßdaten außerhalb des entsprechenden Grenzwertes liegt. Die zur Modellüberprüfung initiierten Verfahrensabläufe sind durch dünne Pfeile dargestellt.

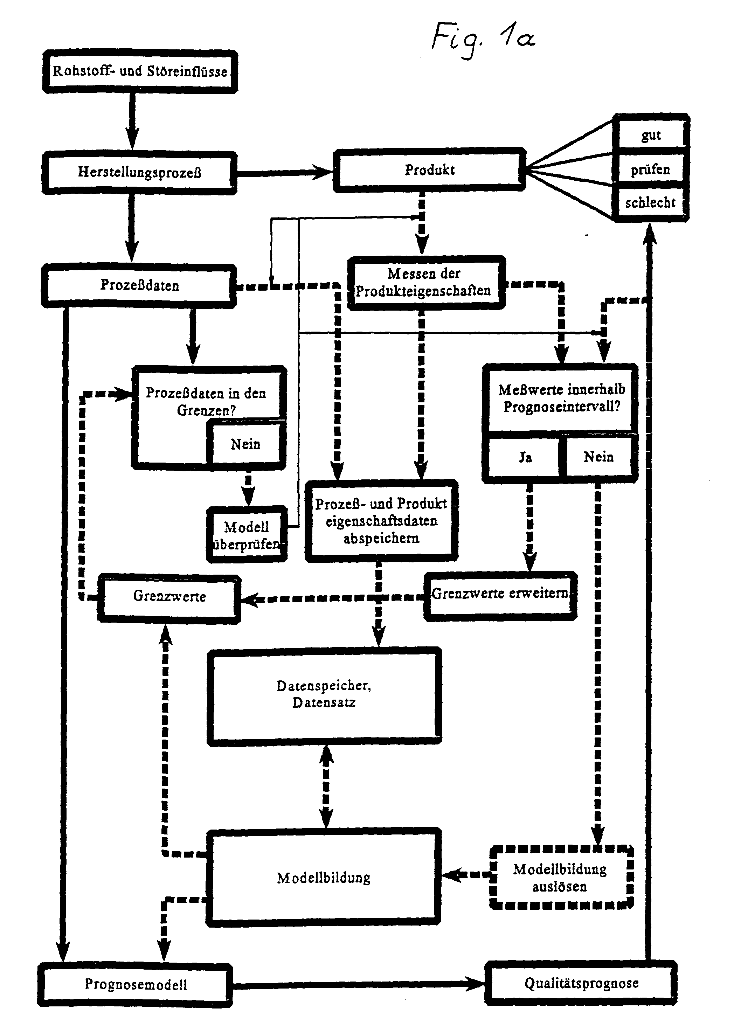

Bei einem Rohstoff- und Störeinflüssen unterliegenden Herstellungsprozeß werden Produkte mit Eigenschaften hergestellt und, wie Figur 1a zeigt, anhand von bei diesem Herstellungsprozeß anfallenden Prozeßdaten mittels eines Prognosemodells die Qualität jedes hergestellten Produktes prognostiziert. Hierbei wird je nach Lage eines von dem Prognosemodell ausgegebenen Prognoseintervalls bezüglich vorgegebener Qualitätsgrenzen in weiter unten erläuterter Weise dem entsprechenden Produkt eines der Qualitätsmerkmale "gut", "schlecht" oder "prüfen" zugeordnet. Statt der bzw. zusätzlich zu der Qualitätsprognose ist es möglich einen Regeleingriff vorzunehmen, der in den Herstellungsprozeß eingreift, um z. B. die Qualität zu optimieren.

Die Prozeßdaten werden ständig mit denjenigen Grenzwerten verglichen, für die das Prognosemodell gültig ist. Liegt wenigstens einer der Prozeßdaten außerhalb des entsprechenden Grenzwertes, wird eine Überprüfung des Modells durchgeführt. Hierzu wird zunächst eine Messung der Produkteigenschaften ausgelöst. Die gemessenen Produkteigenschaftsdaten werden anschließend zusammen mit den korrespondierenden Prozeßdaten in einer Datenbank gespeichert. Desweiteren werden die gemessenen Produkteigenschaftsdaten mit dem von dem existierenden Prognosemodell ausgegebenen Prognoseintervall verglichen. Liegen die Produkteigenschaftsdaten innerhalb des Prognoseintervalls, so kann davon ausgegangen werden, daß das bereits vorhandene Prognosemodell auch für diese, außerhalb der Grenzwerte liegenden Prozeßdaten gültig ist. Es genügt folglich, die Grenzwerte, für die das Prognosemodell gültig ist, entsprechend zu erweitern. Das Überwachungsverfahren ist somit an die neu aufgetretene Schwankung der Prozeßdaten angepaßt. Ebenso kann im Falle einer Regelprognose das Ergebnis der Regelung mit der Regelungsprognose verglichen und die Gültigkeit der Regelungsprognose überprüft werden.

Liegen die gemessenen Produkteigenschaftsdaten nicht innerhalb des durch das existierende Prognosemodell ausgegebenen Prognoseintervalls, wird die Bildung eines neuen Prognosemodells ausgelöst. Hierbei findet der gesamte, in der Datenbank gespeicherte, aus Prozeßdaten samt korrespondierenden Produkteigenschaftsdaten bestehende Datensatz Berücksichtigung. Bei diesem Verfahrensschritt werden auch die Grenzwerte, für die das Prognosemodell gültig ist, neu gesetzt. Es versteht sich, daß anstatt einer Modellneubildung auch eine Modellanpassung auf Grundlage des existierenden Prognosemodells mittels statistischer oder numerischer Methoden bzw. mittels eines verkürzten Lernprozesses bei einem vorhandenen Neuronalen Netzwerk, durchgeführt werden kann.

Das weitere, in Fig. 1b dargestellte Überwachungsverfahren entspricht im wesentlichen dem ersten, in Fig. 1a dargestellten Überwachungsverfahren, hierbei sind - der Übersicht halber - die zur Modellüberprüfung initiierten Verfahrensabläufe nur durch einen von der "Modellüberprüfung" ausgehenden Pfeil symbolisiert. Gegenüber diesem ist das Prognosemodell des zweiten Überwachungsverfahrens auch in der Lage Prozeßparameter zu prognostizieren, die einer Prozeßbewertung (gut - schlecht) zugeführt werden.

Die prognostizierten Prozeßparameter können in zwei Kathegorien unterteilt werden. Die Prozeßparamter der ersten Kathegorie werden laufend gemessen und laufend mit der Prognose verglichen. Hierbei wird überprüft, ob der Meßwert innerhalb der Prognoseintervalls liegt. Ist dieses nicht der Fall, wird eine Modelüberprüfung initiiert. Die Prozeßparameter der zweiten Kathegorie werden nur bei einer Modellüberprüfung gemessen. Es versteht sich, daß die zu prognostizierenden Prozeßparameter je nach ihren Eigenschaften, besonders ihrer Meßtechnischen Erfassbarkeit, und den Bedürfnissen einer geeigneten Kathegorie zugeordnet werden.

Die Modelüberprüfung dieses Überwachungsverfahrens umfaßt zum einen die aus dem ersteren Überwachungsverfahren bekannten Verfahrensschritte und - abläufe. Des weiteren umfaßt die Modellüberprüfung die Messung aller Prozeßparameter soweit diese nicht bereits als Prozeßdaten bzw. Prozeßparameter der ersten Kathegorie zwischengespreichert sind. Sämtliche Prozeßdaten bzw. - paramter und Produkteigenschaftsdaten werden in dem Datensatz gespeichert. Befinden sich sämtliche Meßwerte innerhalb der Prognoseintervalls werden lediglich - erfindungsgemäß - die Grenzwerte erweitert. Andernfalls wird eine Modellbildung ausgelöst.

Erstes Ausführungsbeispiel:

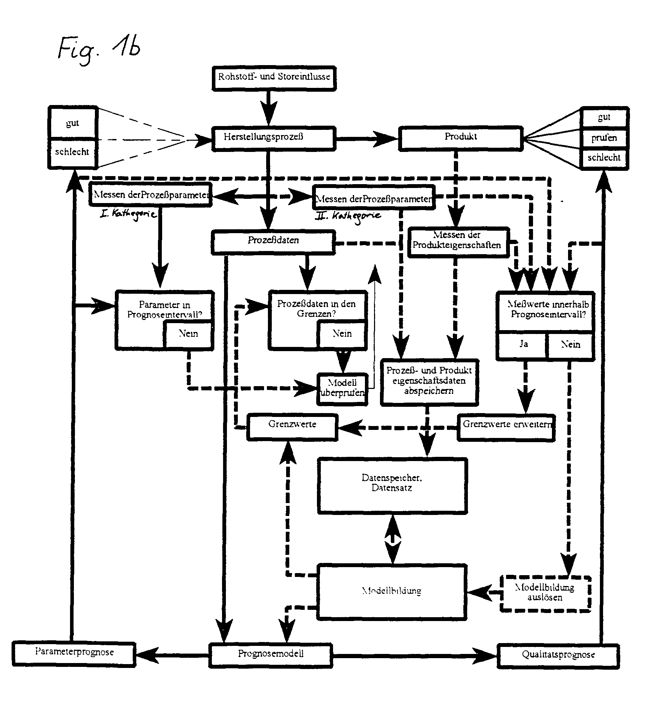

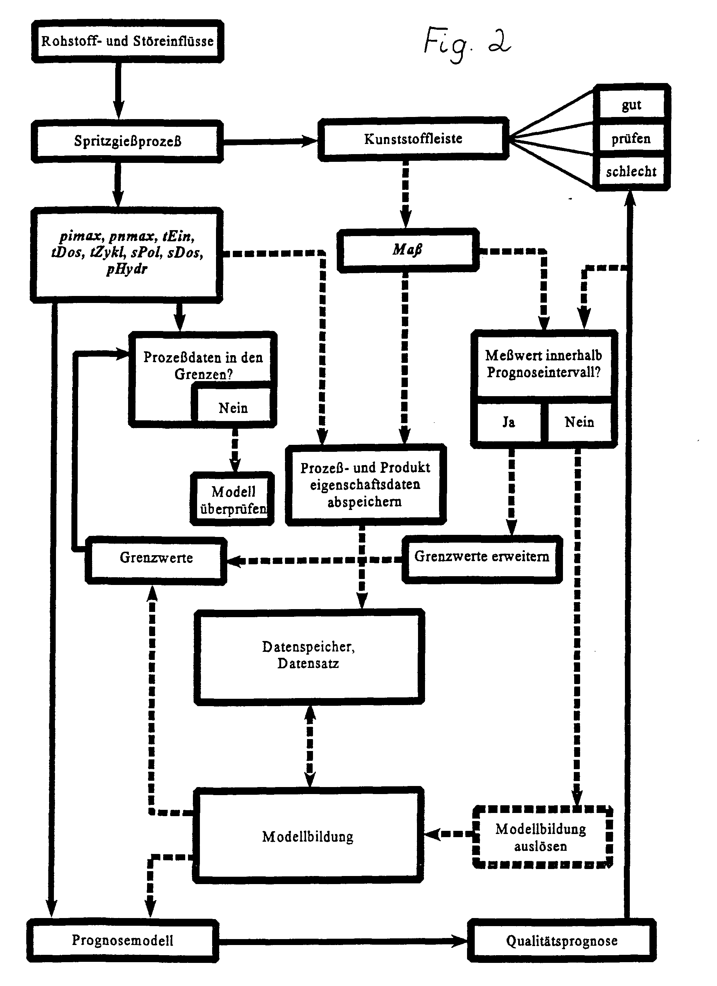

Die Überwachung der Herstellung einer Kunststoffleiste mittels eines Spritzgießprozesses ist in Figur 2 dargestellt. Als interessierende Produkteigenschaft gilt es bei diesem Verfahren, die Durchbiegung der Leiste zu überwachen, die einen maximalen Wert nicht überschreiten darf, da sonst deren Funktionalität nicht mehr gegeben ist.

Neben den ohnehin bei Spritzgießprozessen verfügbaren Prozeßdaten Einspritzzeit, Dosierzeit, Zykluszeit, Massepolster, Dosierweg und Hydraulikdruck wird das Spritzgießwerkzeug noch mit einem piezoelektrischen Druckaufnehmer, als zusätzlichem Sensor, zur Messung des Werkzeuginnendruckes versehen. Mittels dieses Druckaufnehmers werden dem Überwachungsverfahren der maximale Werkzeuginnendruck in der Einspritzphase und der maximale Werkzeuginnendruck in der Nachdruckphase als zusätzliche Prozeßdaten zur Verfügung gestellt.

Die im Falle einer Regelung Bedeutung erlangende Verknüpfung der Prozeßparameter wird zum Beispiel an der Verknüpfung zwischen Hydraulikdruck und Einspritzzeit deutlich. Eine Erhöhung des Hydraulikdrucks könnte die Einspritzzeit derart reduzieren, daß die Qualität der Kunststoffleiste negativ beeinflußt wird. In einem derartigen Fall empfiehlt es sich, diese Verknüpfung in das Prognosemodell integrierbar vorzusehen.

Bei einem pratischen Anwendungsfall werden z.B. die Prozeßgrößen $pimax$ und $pnmax$ als signifikant auf die Durchbiegung der Leiste identifiziert und das folgende statistische Modell zur Beschreibung der Durchbiegung der Leiste bestimmt:

$$Maß = 28{,}954225\,\text{mm} + 0{,}002215\frac{\text{mm}}{\text{bar}} * pimax + 9{,}69839 * 10^{-4}\frac{\text{mm}}{\text{bar}} * pnmax$$

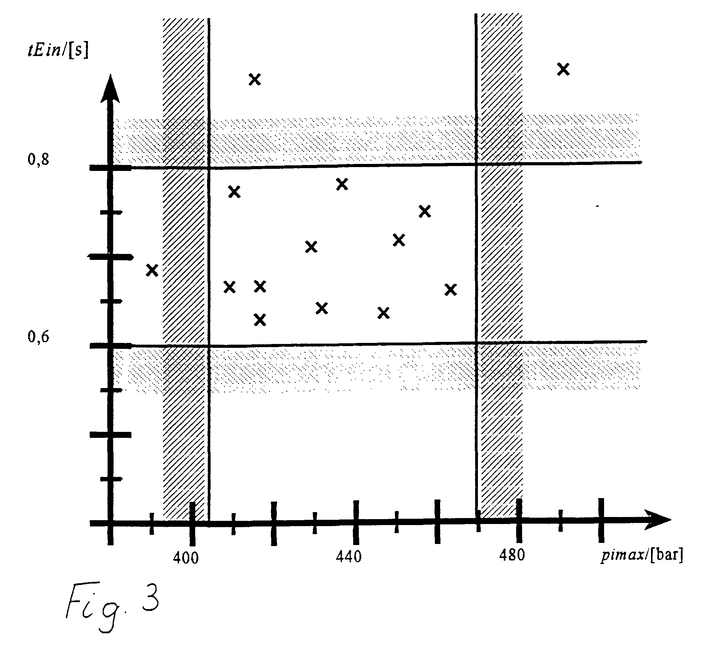

Mit diesem Modell und dem dazugehörigen mittleren Prognoseintervall von $\pm0{,}005$ mm kann für den weiteren Prozeßverlauf für jeden Spritzgießzyklus eine Aussage über die zu erwartende Maßhaltigkeit der Leiste abgegeben werden, solange die Prozeßdaten innerhalb der vorgegebenen Grenzwerte liegen. Diese Situation ist in Figur 3 am Beispiel der Prozeßparameter $pimax$ und $tEin$ durch das schraffiert umrahmte Rechteck dargestellt. Verläßt einer der durch Kreuze dargestellten Prozeßparameter den durch das Rechteck beispielhaft dargestellten Bereich, kann von der Gültigkeit des Prognosemodells, einschließlich der Auswahl der signifikanten Prozeßgrößen und des mittleren Prognoseintervalls, nicht mehr ausgegangen werden und das Prognosemodell muß neu erstellt werden.

Die Durchbiegung Maß läßt sich durch Variation von $pimax$ und $pnmax$ beeinflussen bzw. optimieren. Die nötige Stärke des Regeleingriffs folgt aus den Regressionskoeffizienten vor den Parametern des Modells.

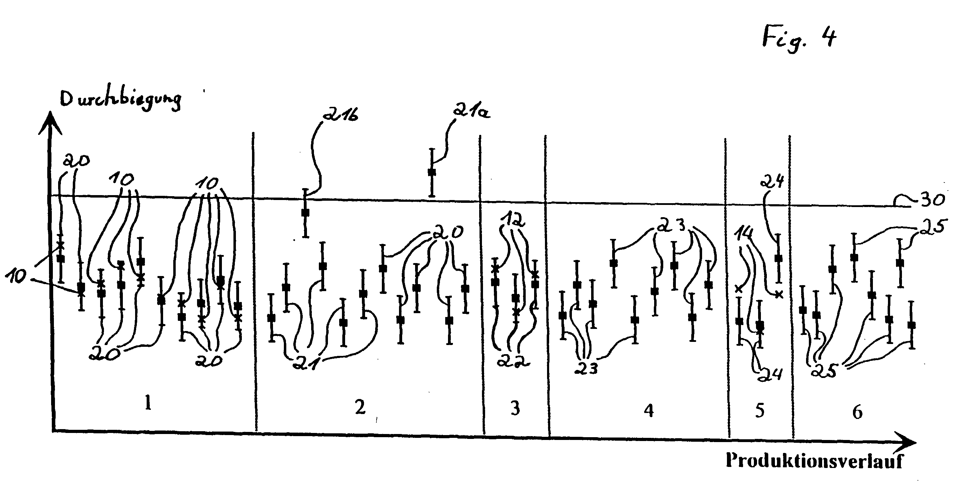

Wie Figur 4 beispielhaft zeigt, wird das Prognosemodell aus während einer ersten Produktionsphase gemessenen Durchbiegungen 10 und den korrespondierenden Prozeßdaten derart gebildet, daß sämtliche in dieser Phase 1 auftretenden Durchbiegungen 10 innerhalb der durch das gebildete Prognosemodell ausgegebenen Prognoseintervalle 20 liegen. Es versteht sich, daß diese Modellbildungsphase 1 auch während des Durchlaufens einer Nullserie ablaufen kann. Nachdem das Prognosemodell aufgestellt ist, können die Durchbiegungen durch die Ausgabe von Prognoseintervallen 21 während einer zweiten Produktionsphase 2 prognostiziert werden. Prognoseintervalle 21a, die außerhalb einer vorher festgelegten Qualitätsgrenze 30 liegen, kennzeichnen das entsprechende Produkt als schlecht. Liegt die Qualitätsgrenze 30 innerhalb eines Prognoseintervalls 21b, so kann das Prognosemodell keine sichere Aussage über die Qualität des entsprechenden Produktes treffen. Das Produkt wird als zu prüfendes Produkt gekennzeichnet.

Während einer dritten Produktionsphase 3 wird das Prognosemodell überprüft, da einer der Prozeßparameter seine zulässigen Grenzen überschritten hat. Hierzu werden die Durchbiegungen der zu dieser Phase 3 gehörenden Produkte gemessen und die gemessene Durchbiegung 12 mit dem entsprechenden Prognoseintervallen 22 verglichen. Wenn, wie beispielhaft dargestellt, innerhalb dieser Überprüfungsphase 3 die gemessene Durchbiegung 12 innerhalb der entsprechenden Prognoseintervalle 22 liegt, ist eine Prognosemodellbildung nicht notwendig. Es genügt den überschrittenen Grenzwert entsprechend zu erweitern.

Innerhalb einer vierten Produktionsphase 4 kann die Prognose der Durchbiegungen mittels des vorliegenden, Prognoseintervalle 23 ausgebenden Prognosemodells fortgesetzt werden.

Treten jedoch während einer Überprüfungsphase 5 Abweichungen zwischen Durchbiegung 14 und ausgegebenen Prognoseintervall 24 auf, ist eine Adaption des Prognosemodells notwendig. Hierzu werden sämtliche, gemessenen Durchbiegungen 10, 12, 14 einschließlich der korrespondierenden Prozeßdaten verwendet. Nach der Adaption liegen alle gemessenen Durchbiegungen 10,12 und 14 innerhalb der von dem neuen Prognosemodell ausgegebenen Prognoseintervalle (nicht dargestellt). Im folgenden kann in einer weiteren Produktionsphase 6 die Durchbiegung mittels der vom neu gebildeten Prognosemodell ausgegebenen Prognoseintervalle 25 prognostiziert werden.

Es versteht sich, daß je nach überwachter Produkteigenschaft neben einer Qualitätsobergrenze 30, wie im vorgestellten Ausführungsbeispiel, auch eine Qualitätsuntergrenze Verwendung finden kann.

Zweites Ausführungsbeispiel:

Die Herstellung von Flachfolien geschieht in einem kontinuierlichen Fertigungsverfahren. Ausgehend von einer extrudierten Kunststoffolie wird diese mittels Walzen auf ihre endgültige Foliendicke ausgewalzt.

Zu diskreten Zeitpunkten werden, entsprechend der Verarbeitungsgeschwindigkeit, sechsundzwanzig Prozeßparameter zeitlich versetzt gemessen, und die gemessenen Werte als Prozeßdaten abgespeichert. Am Folienprodukt werden insgesamt sechzehn Produkteigenschaften durch Labormessungen bestimmt. Wegen der Kontinuität des Herstellungsprozesses können die Folienproben nicht zu jedem beliebigen Zeitpunkt der Folienbahn entnommen werden, ohne eine Produktionsstörung zu verursachen. Aus diesem Grunde werden die notwendigen Folienproben jeweils am Ende der aufgewickelten Folienbahn entnommen.

Bei einem derartig ausgebildeten Überwachungsverfahren kann nicht mehr, wie bei diskontinuierlichen Herstellungsprozessen - siehe erstes Ausführungsbeispiel -, von einer 100%igen On-line-Qualitätsprognose gesprochen werden, sondern von einer On-line-Qualitätsprognose, die zwar prinzipiell eine Qualitätsprognose zu jedem beliebigen Zeitpunkt ermöglicht, bei welcher jedoch die kürzeste Zeitspanne zwischen zwei Qualitätsprognosen durch die Feedforward-Phase eines Neuronalen Netzwerkes bzw. durch die Rechenzeit zur Berechnung einer aus einer Regressionsanalyse folgenden, linearen Gleichung bestimmt ist.

Das zu erstellende Prozeßmodell bildet die sechsundzwanzig Prozeßparameter auf die sechzehn Folieneigenschaften ab. Zum einen könnte dieses Prognosemodell sechzehn, aus multiplen linearen Regressionsanalysen folgende, lineare Gleichungen - für jede Folieneigenschaft eine - umfassen, die jeweils nur die unter einer Irrtumswahrscheinlichkeit von $\alpha = 0,05$ signifikanten Prozeßparameter enthalten. Zum anderen sind auch Neuronale Netzwerke mit einem 26-dimensionalen Eingangsvektor und einem 16-dimensionalen Ausgangsvektor denkbar. Es zeigt sich, daß das Bestimmtheitsmaß bei einem verwendeten Netzwerk mit der Topologie 26-19-17 geringer ist als bei dem oben angesprochenen Regressionsmodell. Netzwerktopologien 26-23-16 oder 26-21-19-16 beschreiben alle Folieneigenschaften mit höherem Bestimmtheitsmaß als die entsprechenden linearen Regressionsmodelle.

Die verschiedenen Netzwerke können zum Beispiel über 10.000 Epochen mit einer Lernrate von $\eta = 0,7$ und einem Momentumterm von $\alpha = 0,4$ trainiert werden. Hieraus folgt beispielsweise für eine Datenbank mit 123 Datensätzen und einem 1305 Freiheitsgrade aufweisenden Netzwerk der Topologie 26-21-19-16, daß während der Lernphase insgesamt ca. 1,6 Milliarden Gewichtsänderungen vorgenommen werden.

Nachdem das Neuronale Netzwerk trainiert worden ist, können die Produkteigenschaften anhand dieses Neuronalen Netzwerkes prognostiziert werden. Der vom Neuronalen Netzwerk ausgegebene Wert und das um diesen symmetrisch angeordnete Intervall, welches die maximale Abweichung zwischen dem Ausgabewert des Netzwerkes und dem gewünschten Zielwert während der Lernphase des Neuronalen Netzwerkes beschreibt, wird als Prognoseintervall verwendet.

Drittes Ausführungsbeispiel:

In einer Abwandlung des ersten Ausführungsbeispiels wird neben der Prognose der Leistendurchbiegung - also der Produkteigenschaft *Ma*ß - auch die Zykluszeit *tZykl* prognostiziert. Das Prognosemodell dient bei diesem dritten Ausführungsbeispiel folglich auch der Prognose von durch einen Regelangriff bedingten Veränderungen der Prozeßdaten, nämlich der Zykluszeit (vergl. Fig. 1b).

Auf diese Weise ist es möglich, bei vorliegendem Prozeß neben einer Qualitätsprognose bzw. -regelung auch die Zykluszeit bzw. die Prozeßdauer für den entsprechenden Herstellungsprozeß eines Produktes zu prognostizieren bzw. zu optimieren. Diese Optimierung erfolgt innerhalb der in der Tabelle des ersten Ausführungsbeispiels angegebenen Grenzen der Zykluszeit. Wie unmittelbar ersichtlich, läßt sich innerhalb dieser Grenzen die Zykluszeit um 0,2 s variieren, was einer Zykluszeitverkürzung bzw. Prozeßbeschleunigung von ca. 1 % entspricht. Die Relevanz einer derartigen Produktivitätssteigerung ist insbesondere im Zusammenhang mit Massenprodukten unmittelbar ersichtlich.

Es versteht sich, daß - sollte sich dieser Grenzbereich erweitern - die Variationsbreite der Zykluszeit entsprechend erhöht und deren Dauer unter Berücksichtigung der Produkteigenschaft, nämlich der Leistendurchbiegung, optimiert wird. Hierbei wird die Zykluszeit ständig gemessen - dieses ist in der Regel verhältnismäßig unkompliziert. Laufend wird gleichzeitig die Zykluszeit prognostiziert und diese Prognose zur Bewertung der Produktivität genutzt. Gleichzeitig werden gemessene Zykluszeit und prognostizierte Zykluszeit verglichen und das Prognosemodell überprüft, wenn die gemessene Zykluszeit nicht innerhalb des Prognoseintervalls liegt (I. Kathegorie). Statt eine Produktivitätsoptimierung über den Prozeßparameter Zykluszeit vorzunehmen, kann dieses auch über einzelne Komponenten der Zykluszeit geschehen. Insbesondere bietet sich hierfür - wie schon beim ersten Ausführungsbeispiel angedeutet - eine Optimierung der Einspritzzeit an.

In einer Abwandlung des dritten Ausführungsbeispiels wird in Ergänzung zur Produktivitätskontrolle über die Zykluszeit auch die Einspritzzeit prognostiziert. Bei dieser Abwandlung wird auf eine ständige Messung der Einspritzzeit verzichtet und die Einspritzzeit nur dann dem Verfahren zugeführt , wenn das Prognosemodell überprüft wird. Die Einspritzzeit wird folglich ähnlich wie eine Produkteigenschaft behandelt (II. Kathegorie).

Die Einspritzzeit ist u. a. mit dem Hydraulikdruck korreliert. Dieser hat andererseits Einfluß auf die Produktqualität, sprich die Leistendurchbiegung. Diese Überlegungen zeigen, daß das diesem Ausführungsbeispiel zugrundeliegende Modell ein System gekoppelter linearer Gleichungen ist, welches die vorgenannten Beziehungen reflektiert und in besonders vorteilhafter Weise eine Prognose zur Produktivitätsoptimierung ermöglicht.

## Bezugszeichenliste

1    Modellbildungsphase (Nullserie)
2    Produktionsphase mit Qualitätsprognose
3    Produktionsphase mit Modellüberprüfung
4    Produktionsphase mit Qualitätsprognose
5    Produktionsphase mit Modellüberprüfung und Modellbildung
6    Produktionsphase mit Qualitätsprognose nach neuem Modell

10   Meßwert während Nullserie
20   Prognoseintervall, berechnet nach Modellbildung

21   Prognoseintervall
21a  Prognoseintervall außerhalb Qualitätsgrenze
21b  Prognoseintervall schneidet Qualitätsgrenze

12   Meßwert während Modellüberprüfung
22   Prognoseintervall während Modellüberprüfung

23   Prognoseintervall

14   Meßwert während Modellüberprüfung
24   Prognoseintervall während Modellüberprüfung

25   Prognosintervall

30   maximal erlaubte Durchbiegung

**Patentansprüche**

1. Verfahren zur Überwachung der Eigenschaften von durch zumindest einen Herstellungsprozeß hergestellten, jeweils ähnlichen Produkten, bei welchem

   die Produkteigenschaften aufgrund von Prozeßdaten mittels eines Prognosemodells, welches zumindestens ein Prognoseintervall ausgibt, prognostiziert werden,
   gemessene Produkteigenschaftsdaten zusammen mit korrespondierenden Prozeßdaten gespeichert werden und
   das Prognosemodell anhand von Prüfdaten überwacht und gegebenenfalls aktualisiert wird,
   **gekennzeichnet durch**
   kontinuierliches Überwachen und Speichern der verfügbaren Prozeßdaten und deren Vergleich mit denjenigen Grenzwerten, für die das Prognosemodell gültig ist,
   Auslösen der Messung und Erfassung der Eigenschaften desjenigen Produktes, für welches die Prozeßdaten außerhalb zumindest eines Grenzwertes liegen,
   Vergleichen des Meßergebnisses mit dem Prognoseintervall,
   Anpassen der Grenzwerte an das Meßergebnis sowie an den die korrespondierenden Prozeßdaten einschließenden Datensatz zumindest dann, wenn das Meßergebnis innerhalb des Prognoseintervalls liegt, und
   Anpassen des Prognosemodells zumindest dann, wenn eine Abweichung zwischen dem Meßergebnis und dem Prognoseintervall festgestellt wird.

2. Verfahren zur Regelung eines jeweils ähnliche Produkte herstellenden Herstellungsprozeßes, bei welchem

   die Produkteigenschaften aufgrund von Prozeßdaten mittels eines Prognosemodells, welches zumindestens ein Prognoseintervall ausgibt, prognostiziert werden,
   das Prognosemodell zur Prognose des Einflusses eines Regeleingriffs innerhalb eines Regelkreises genutzt wird,
   gemessene Produkteigenschaftsdaten zusammen mit korrespondierenden Prozeßdaten gespeichert werden und
   das Prognosemodell anhand von Prüfdaten überwacht und gegebenenfalls aktualisiert wird,
   **gekennzeichnet durch**
   kontinuierliches Überwachen und Speichern der verfügbaren Prozeßdaten und deren Vergleich mit denjenigen Grenzwerten, für die das Prognosemodell gültig ist,
   Auslösen der Messung und Erfassung der Eigenschaften desjenigen Produktes, für welches die Prozeßdaten außerhalb zumindest eines Grenzwertes liegen,
   Vergleichen des Meßergebnisses mit dem Prognoseintervall,
   Anpassen der Grenzwerte an das Meßergebnis sowie an den die korrespondierenden Prozeßdaten einschließenden Datensatz zumindest dann, wenn das Meßergebnis innerhalb des Prognoseintervalls liegt, und
   Anpassen des Prognosemodells zumindest dann, wenn eine Abweichung zwischen dem Meßergebnis und dem Prognoseintervall festgestellt wird.

3. Regelungsverfahren nach Anspruch 2, **dadurch gekennzeichnet, daß** der Regelkreis zumindest ein Stellglied umfaßt und zumindest ein Teil der entsprechenden Stellgrößen des Stellgliedes als Prozeßdaten erfaßt wird.

4. Regelungsverfahren nach Anspruch 2 oder 3, **dadurch gekennzeichnet, daß** das Prognosemodell auch eine durch den Regeleingriff bedingte Veränderung der Prozeßdaten prognostiziert.

5. Verfahren nach einem der Ansprüche 1 bis 4, **dadurch gekennzeichnet, daß** das Prognosemodell Prozeßparameter prognostiziert.

6. Verfahren nach Anspruch 5, **dadurch gekennzeichnet, daß** dem Prognosemodell für die jeweilige Prognose ausschließlich gemessene und keine den durch das Prognosemodell prognostizierten Prozeßparamter entsprechende Prozeßdaten zugeführt werden.

7. Verfahren nach Anspruch 5 oder 6, **dadurch gekennzeichnet, daß** die durch das Prognosemodell prognostizierten Prozeßparameter die Produktivität des Herstellungsprozesses repräsentierende Prozeßparameter umfassen.

8. Verfahren nach Anspruch 7, **dadurch gekennzeichnet, daß** die Prozeßparameter eine Prozeßdauer, wie eine Zykluszeit oder eine Prozeßgeschwindigkeit, oder eine Prozeßdauer für Teilprozesse, wie Einspritzzeit, Dosierzeit oder Nachdruckzeit, bzw. hierzu proportionale Größen umfassen.

9. Verfahren nach einem der Ansprüche 5 bis 8, **gekennzeichnet durch** kontinuierliches Überwachen und Speichern zumindest eines prognostozierten Prozeßparameters und **durch** Auslösen einer Modellüberprüfung, wenn der überwachte und gespeichert Prozeßparameter außerhalb des entsprechenden Prognoseintervalls liegt.

10. Verfahren nach Anspruch 9, **dadurch gekennzeichnet, daß** die Modellüberprüfung ein Auslösen der Messung und Erfassung der Prozeßparamameter sowie der Eigenschaften desjenigen Produktes, für welches der überwachte und gespeichert Prozeßparameter außerhalb des entsprechenden Prognoseintervalls liegt, und die Anpassung des Prognosemodells umfaßt.

11. Verfahren nach einem der Ansprüche 1 bis 10, **dadurch gekennzeichnet, daß** das Prognosemodell jeweils anhand der gespeicherten Prozeßdaten und Produkteigenschaftsdaten erstellt, bzw. angepaßt wird.

12. Verfahren nach einem der Ansprüche 1 bis 11, **dadurch gekennzeichnet, daß** zum erstmaligen Erstellen des Prognosemodells eine Nullserie gefahren wird.

13. Verfahren nach Anspruche 11 oder 12, **dadurch gekennzeichnet, daß** das Prognosemodell mittels multipler linearer Regressionsanalyse aus den gespeicherten Prozeßund Produkteigenschaftsdaten gebildet wird.

14. Verfahren nach Anspruch 13, **dadurch gekennzeichnet, daß** die multiple lineare Regressionsanalyse nach dem Verfahren der "stepwise"-Regression durchgeführt wird.

15. Verfahren nach einem der Ansprüche 1 bis 14, **dadurch gekennzeichnet, daß** das Prognosemodell ein künstliches Neuronales Netzwerk umfaßt.

16. Verfahren nach Anspruch 15, **dadurch gekennzeichnet, daß** der Verfahrensschritt der Prognosemodellerstellung, bzw. -anpassung durch Trainieren des künstlichen Neuronalen Netzwerkes gebildet wird.

17. Verfahren nach einem der Ansprüche 1 bis 16, **dadurch gekennzeichnet, daß** zumindest ein Teil der Daten eines Sensors, welcher zur Steuerung zumindest einer im Herstellungsprozeß verwendeten Vorrichtung dient, als Prozeßdaten erfaßt wird.

## Claims

1. A method of monitoring the properties of products, respectively similar products, manufactured by at least one manufacturing process, in which

   the product properties are forecast on the basis of process data by means of a forecasting model which outputs at least one forecasting interval,
   measured product-property data are stored together with corresponding process data, and the forecasting model is monitored with the use of test data and updated if necessary,
   **characterised by**
   continuous monitoring and storage of the available process data and their comparison with the limiting values for which the forecasting model is valid;
   initiation of the measurement and acquisition of the properties of that product for which the process data lie outside at least one limiting value;
   comparison of the measured result with the forecasting interval;
   adjustment of the limiting values to the measured result as well as to the data record including the corresponding process data, at least at times when the measured result lies within the forecasting interval, and
   adjustment of the forecasting model at least at times when a difference is detected between the measured result and the forecasting interval.

2. A method for controlling a manufacturing process manufacturing products, respectively similar products, in which

   the product properties are forecast on the basis of process data by means of a forecasting model which outputs at least one forecasting interval,

the forecasting model is used to forecast the effect of a control intervention within a control circuit,

measured product-property data are stored together with corresponding process data, and

the forecasting model is monitored with the use of test data and updated if necessary,

**characterised by**

continuous monitoring and storage of the available process data and their comparison with the limiting values for which the forecasting model is valid;

initiation of the measurement and acquisition of the properties of that product for which the process data lie outside at least one limiting value;

comparison of the measured result with the forecasting interval;

adjustment of the limiting values to the measured result as well as to the data record including the corresponding process data, at least at times when the measured result lies within the forecasting interval, and

adjustment of the forecasting model at least at times when a difference is detected between the measured result and the forecasting interval.

3. A control method according to Claim 2, **characterised in that** the control circuit comprises at least one servo component and at least one part of the corresponding correcting variables of the servo component are acquired as process data.

4. A control method according to Claim 2 or 3, **characterised in that** the forecasting model also forecasts a change in the process data determined by the control intervention.

5. A method according to one of Claims 1 to 4, **characterised in that** the forecasting model forecasts process parameters.

6. A method according to Claim 5, **characterised in that** exclusively measured process data, and not process data corresponding to the process parameters forecast by the forecasting model, are fed into the forecasting model for the particular prognosis.

7. A method according to Claim 5 or 6, **characterised in that** the process parameters forecast by the forecasting model comprise process parameters representing the productivity of the manufacturing process.

8. A method according to Claim 7, **characterised in that** the process parameters comprise a process duration such as a cycle time or a process speed, or a process duration for partial processes, such as injection time, metering time or dwell-pressure time, or variables proportional hereto.

9. A method according to one of Claims 5 to 8, **characterised by** continuous monitoring and storage of at least one forecast process parameter, and by initiation of a check of the model if the monitored and stored process parameter lies outside the corresponding forecasting interval.

10. A method according to Claim 9, **characterised in that** the check of the model comprises initiation of the measurement and acquisition of the process parameters and of the properties of the product for which the monitored and stored process parameter lies outside the corresponding forecasting interval, and adjustment of the forecasting model.

11. A method according to one of Claims 1 to 10, **characterised in that** the forecasting model is in each case prepared with the use of the stored process data and product-property data, or adjusted.

12. A method according to one of Claims 1 to 11, **characterised in that** a pilot run is carried out for the purpose of preparing the forecasting model for the first time.

13. A method according to Claims 11 or 12, **characterised in that** the forecasting model is formed from the stored process data and product-property data by means of multiple linear-regression analysis.

14. A method according to Claim 13, **characterised in that** multiple linear-regression analysis is performed in accordance with the stepwise regression method.

15. A method according to one of Claims 1 to 14, **characterised in that** the forecasting model comprises an artificial neuronal network.

16. A method according to Claim 15, **characterised in that** the method stage of preparing or adjusting the forecasting model is formed by training the artificial neuronal network.

17. A method according to one of Claims 1 to 16, **characterised in that** at least one part of the data of a sensor which serves to actuate at least one device used in the manufacturing process, is acquired as the process data.

**Revendications**

1. Procédé de surveillance des propriétés de produits respectivement similaires, fabriqués selon au moins un processus de fabrication, dans lequel

   il est fait un pronostic des propriétés de produit sur la base de données de processus au moyen d'un modèle de pronostic qui émet au moins un intervalle de pronostic,
   des données de propriétés de produit mesurées sont stockées ensemble avec les données de processus correspondantes et
   le modèle de pronostic est surveillé à l'aide de données de vérification et est le cas échéant actualisé,
         **caractérisé par**
   une surveillance continue et un stockage des données de processus disponibles et leur comparaison avec les valeurs limites, pour lesquelles le modèle de pronostic est valable,
   le déclenchement de la mesure et de la détection des propriétés du produit pour lequel les données de processus se situent à l'extérieur d'au moins une valeur limite,
   la comparaison du résultat de mesure avec l'intervalle de pronostic,
   l'adaptation des valeurs limites au résultat de mesure ainsi qu'au jeu de données renfermant les données de processus correspondantes au moins lorsque le résultat de mesure se situe à l'intérieur de l'intervalle de pronostic et
   l'adaptation du modèle de pronostic au moins lorsqu'un écart est constaté entre le résultat de mesure et l'intervalle de pronostic.

2. Procédé de réglage d'un processus de fabrication fabriquant respectivement des produits similaires, dans lequel

   il est fait un pronostic des propriétés de produits sur la base de données de processus au moyen d'un modèle de pronostic qui émet au moins un intervalle de pronostic,
   le modèle de pronostic est utilisé pour apprécier l'influence d'une intervention de réglage à l'intérieur d'un circuit de réglage,
   des données de propriétés de produits mesurées sont stockées ensemble avec des données de processus correspondantes et
         le modèle de pronostic est surveillé à l'aide de données de mesure et est actualisé le cas échéant,
   **caractérisé par**
   une surveillance continue et un stockage des données de processus disponibles et leur comparaison avec les valeurs limites pour lesquelles le modèle de pronostic est valable,
   déclenchement de la mesure et détection des propriétés du produit pour lequel les données de processus se situent à l'extérieur d'au moins une valeur limite,
   comparaison du résultat de mesure avec l'intervalle de pronostic,
   adaptation des valeurs limites au résultat de mesure ainsi qu'au jeu de données renfermant les données de processus correspondantes lorsque le résultat de mesure se situe à l'intérieur de l'intervalle de pronostic et
   adaptation du modèle de pronostic au moins lorsqu'un écart est constaté entre le résultat de mesure et l'intervalle de pronostic.

3. Procédé de réglage selon la revendication 2,
   **caractérisé en ce que** le circuit de réglage comprend au moins un organe de positionnement et qu'il est détecté au moins une partie des grandeurs de positionnement correspondantes de l'organe de positionnement comme données de processus.

4. Procédé de réglage selon la revendication 2 ou 3, **caractérisé en ce que** le modèle de pronostic établit également le pronostic d'une modification des données de processus provoquée par l'intervention dans le réglage.

**5.** Procédé selon l'une des revendications 1 à 4,
**caractérisé en ce que** le modèle de pronostic établit un pronostic des paramètres de pronostic.

**6.** Procédé selon la revendication 5, **caractérisé en ce que** sont amenées au modèle de pronostic, pour le pronostic respectif, exclusivement des données de processus mesurées et non pas des données correspondant aux paramètres de processus pronostiqués par le modèle de pronostic.

**7.** Procédé selon la revendication 5 ou 6,
**caractérisé en ce que** les paramètres de processus pronostiqués par le modèle de pronostic comprennent la productivité des paramètres de processus représentant le processus de fabrication.

**8.** Procédé selon la revendication 7, **caractérisé en ce que** les paramètres de processus comprennent une durée de processus, comme un temps de cycle ou une vitesse de processus, ou bien une durée de processus pour des processus partiels, comme un temps d'injection, un temps de dosage ou un temps de pression subséquente, respectivement des grandeurs proportionnelles à ceux-ci.

**9.** Procédé selon l'une des revendications 5 à 8,
**caractérisé par** une surveillance continue et un stockage d'au moins un paramètre de processus pronostiqué et par le déclenchement d'une vérification du modèle lorsque le paramètre de processus surveillé et stocké se situe à l'extérieur de l'intervalle de pronostic correspondant.

**10.** Procédé selon la revendication 9, **caractérisé en ce que** la vérification du modèle comprend un déclenchement de la mesure et la détection des paramètres de processus ainsi que des propriétés du produit pour lequel le paramètre de processus surveillé et stocké se situe à l'extérieur de l'intervalle de pronostic correspondant, et l'adaptation du modèle de pronostic.

**11.** Procédé selon l'une des revendications 1 à 10,
**caractérisé en ce que** le modèle de pronostic est établi respectivement adapté à chaque fois à l'aide des données de processus et données de propriétés de produit stockées.

**12.** Procédé selon l'une des revendications 1 à 11,
**caractérisé en ce que** pour l'établissement initial du modèle de pronostic, une série zéro est exécutée.

**13.** Procédé selon les revendications 11 ou 12,
**caractérisé en ce que** le modèle de pronostic est établi au moyen d'une analyse par régression linéaire multiple à partir des données de processus et des propriétés de produit stockées.

**14.** Procédé selon la revendication 13, **caractérisé en ce que** l'analyse par régression linéaire multiple est faite selon le procédé de la régression « pas à pas ».

**15.** Procédé selon l'une des revendications 1 à 14,
**caractérisé en ce que** le modèle de pronostic comprend un réseau neuronal artificiel.

**16.** Procédé selon la revendication 15, **caractérisé en ce que** l'étape de procédé de l'établissement respectivement de l'adaptation du modèle de pronostic est constituée par un entraînement du réseau neuronal artificiel.

**17.** Procédé selon l'une des revendications 1 à 16,
**caractérisé en ce qu'**au moins une partie des données d'un capteur, qui sert à la commande d'au moins un dispositif utilisé dans le processus de fabrication, est détectée comme données de processus.

Fig. 1a

```
┌─────────────────────────┐
│ Rohstoff- und Störeinflüsse │
└─────────────────────────┘
             │
             ▼
┌─────────────────────────┐        ┌─────────────────────────┐                    ┌──────────┐
│    Herstellungsprozeß   │ ────▶  │        Produkt          │                    │   gut    │
└─────────────────────────┘        └─────────────────────────┘                    ├──────────┤
             │                                  │                                  │  prüfen  │
             │                                  │                                  ├──────────┤
             ▼                                  ▼                                  │ schlecht │
┌─────────────────────────┐        ┌─────────────────────────┐                    └──────────┘
│       Prozeßdaten       │        │      Messen der         │
└─────────────────────────┘        │   Produkteigenschaften  │
                                   └─────────────────────────┘
```

┌─────────────────────────┐                              ┌─────────────────────────┐
│   Prozeßdaten in den    │                              │   Meßwerte innerhalb    │
│       Grenzen?          │                              │   Prognoseintervall?    │
│          ┌──────────────┤                              ├────────────┬────────────┤
│          │     Nein     │                              │     Ja     │    Nein    │
└──────────┴──────────────┘                              └────────────┴────────────┘

┌──────────────┐   ┌─────────────────────────┐
│    Modell    │   │   Prozeß- und Produkt   │
│  überprüfen  │   │   eigenschaftsdaten     │
└──────────────┘   │      abspeichern        │
                   └─────────────────────────┘

┌──────────────────┐              ┌──────────────────────┐
│    Grenzwerte    │              │  Grenzwerte erweitern │
└──────────────────┘              └──────────────────────┘

┌─────────────────────────┐
│     Datenspeicher,      │
│       Datensatz         │
└─────────────────────────┘

┌─────────────────────────┐              ┌─────────────────────────┐
│      Modellbildung      │  ◀────       │     Modellbildung       │
│                         │              │        auslösen         │
└─────────────────────────┘              └─────────────────────────┘

┌─────────────────────────┐                              ┌─────────────────────────┐
│     Prognosemodell      │ ───────────────────────────▶ │    Qualitätsprognose    │
└─────────────────────────┘                              └─────────────────────────┘

Fig. 1b

Rohstoff- und Storeinflusse

gut

schlecht

Herstellungsprozeß → Produkt

gut

prufen

schlecht

Messen derProzeßparameter
I. Kathegorie

Messen derProzeßparameter
II. Kathegorie

Prozeßdaten

Messen der
Produkteigenschaften

Parameter in
Prognoseintervall?

Nein

Prozeßdaten in den
Grenzen?

Nein

Meßwerte innerhalb
Prognoseintervall?

Ja | Nein

Modell
uberprufen

Prozeß- und Produkt
eigenschaftsdaten
abspeichern

Grenzwerte → Grenzwerte erweitern

Datenspeicher,
Datensatz

Modellbildung ← Modellbildung
auslösen

Parameterprognose ← Prognosemodell → Qualitatsprognose

Fig. 2

```
┌──────────────────────────┐
│ Rohstoff- und Störeinflüsse │
└──────────────────────────┘
            │
            ▼
┌──────────────────┐      ┌──────────────────┐                    ┌──────────┐
│ Spritzgießprozeß │─────▶│ Kunststoffleiste │───────────────────▶│   gut    │
└──────────────────┘      └──────────────────┘                    ├──────────┤
            │                      ┊                               │  prüfen  │
            ▼                      ┊                               ├──────────┤
┌──────────────────────┐          ▼                               │ schlecht │
│ pimax, pnmax, tEin,  │    ┌──────────┐                           └──────────┘
│ tDos, tZykl, sPol, sDos, │  │   Maß    │
│ pHydr                │    └──────────┘
└──────────────────────┘
            │
            ▼
┌──────────────────┐                              ┌──────────────────────┐
│ Prozeßdaten in den │                            │ Meßwert innerhalb    │
│ Grenzen?         │                              │ Prognoseintervall?   │
├──────────┬───────┤                              ├──────────┬───────────┤
│          │ Nein  │                              │   Ja     │   Nein    │
└──────────┴───────┘                              └──────────┴───────────┘
               │
               ▼
        ┌──────────┐       ┌──────────────────────┐
        │ Modell   │       │ Prozeß- und Produkt  │
        │ überprüfen│      │ eigenschaftsdaten    │
        └──────────┘       │ abspeichern          │
                           └──────────────────────┘
┌──────────────┐                              ┌──────────────────────┐
│ Grenzwerte   │◀─────────────────────────────│ Grenzwerte erweitern │
└──────────────┘                              └──────────────────────┘

            ┌──────────────────────┐
            │ Datenspeicher,       │
            │ Datensatz            │
            └──────────────────────┘

            ┌──────────────────────┐       ┌──────────────────────┐
            │ Modellbildung        │◀──────│ Modellbildung        │
            │                      │       │ auslösen             │
            └──────────────────────┘       └──────────────────────┘

┌──────────────────┐                       ┌──────────────────────┐
│ Prognosemodell   │──────────────────────▶│ Qualitätsprognose    │
└──────────────────┘                       └──────────────────────┘
```

Fig. 3

*Fig. 4*

EP 0 756 219 B1